# EUROPEAN PATENT APPLICATION

(11) **EP 1 608 133 A2**
(43) Date of publication of application: **21.12.2005**
(21) Application number: 05012808.1
(22) Date of filing: 14.06.2005
(51) Int. Cl.: H04M 1/247

(54) **Method of providing menu effect layer on mobile communication terminal and method of providing menu effect using menu effect layer**

(30) Priority: 14.06.2004 KR 2004043758
(71) Applicant: SAMSUNG ELECTRONICS CO., LTD., Suwon-si, Gyeonggi-do (KR)
(72) Inventor: Kang, Tae-Young, Yeongtong-gu Suwon-si Gyeonggi-do (KR); Kim, Si-Nae, Yeongtong-gu Suwon-si Gyeonggi-do (KR); Jung, Min-Hwa, Yeongtong-gu Suwon-si Gyeonggi-do (KR); Kim, Yu-Ran, Yeongtong-gu Suwon-si Gyeonggi-do (KR); Hwang, Byeong-Cheol, Yeongtong-gu Suwon-si Gyeonggi-do (KR); Kim, Bong-Hee, Goyang-si Gyeonggi-do (KR)
(74) Representative: Grünecker, Kinkeldey, Stockmair & Schwanhäusser Anwaltssozietät

(57) **Abstract**

A menu effect layer that allows improved visibility of selected menu items and a new and fun interface to a user are disclosed. The method includes the steps of providing a background layer to display a background having a plurality of tiles corresponding to menu items of the mobile communication terminal, providing an icon layer, corresponding to each tile of the background layer, to display the contents of the menu item corresponding to each tile, providing a selecting pad layer, corresponding to each tile of the background layer, to display the tile shifted by means of an input using an indicator, and providing a menu effect layer to output predetermined visual effects to the tile indicated by the indicator so that the user of the mobile communication terminal can easily see the current state of the tile indicated by the indicator of the selecting pad layer.

## Description

The present invention relates to a mobile communication terminal, and more particularly to a method of providing a menu screen on a mobile communication terminal.

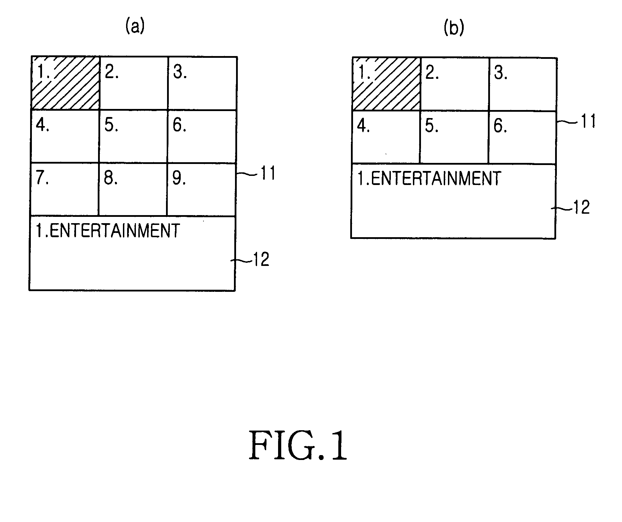

Generally, a menu screen provided on a mobile communication terminal has a tile structure as shown in FIG. 1a or FIG. 1b. The menu screen is divided into a menu selection part 11, to select menu items composed of icons, and a function display part 12, to display the function of a selected menu item.

The menu selection part 11 of FIG. 1a is formed with a 3 x 3 tile structure, and the menu selection part 11 of FIG. 1b is formed with a 2 x 3 tile structure.

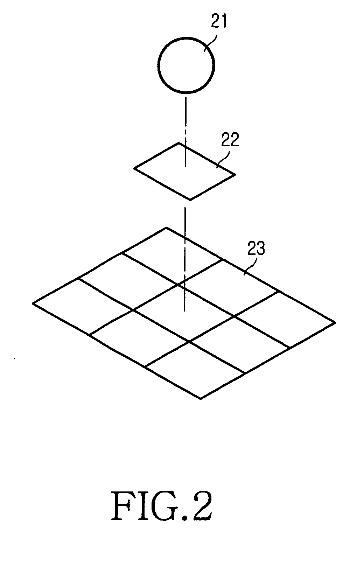

The layer structure of a menu screen having one of the above tile structures is illustrated in FIG. 2. It should be noted that the illustrated menu screen is an example, and thus the present invention is not limited to the illustrated menu screen. For example, the menu screen may have only the menu selection part 11.

FIG. 2 is a view showing the layer structure of a conventional tile-structured menu screen.

As shown in FIG 2, the menu screen comprises: a background layer 23 to provide a tile-structured background; a selecting pad layer 22, corresponding to each tile of the background layer 23, to provide an indicator indicating shift of menu items carried out by pressing direction keys; and an icon layer 21, corresponding to each tile of the background layer 23, to display the content of the menu item corresponding to a selected tile using a symbol or a figure. Specifically, the icon layer 21 provides various icons, such as an envelope icon to display text message items, a speaker icon to display sound setting items, and a monitor icon to display screen configuration items, to display the content of the menu item corresponding to the selected tile.

The menu screen constructed as described above is provided to a user as shown in FIG. 1a or FIG. 1b. The border color of the tile of the background layer 23 may be a different color than other parts of the background layer 23, or the tile of the background layer 23 may be shaded by means of the indicator of the selecting pad layer 22 to show shift between the menu items corresponding to the tiles of the background layer 23. In this way, the desired menu item is selected.

With the conventional menu screen having the above-described layer structure, however, a shift between the menu items and an indication of the current position are performed only by means of the selecting pad layer 22. As a result, the conventional menu screen has a low visibility.

Furthermore, the conventional menu screen does not satisfy a demand for a new and fun interface.

Therefore, the present invention has been made in view of at least the above problem.

It is the object of the present invention to provide a menu effect layer that allows for an improved visibility of selected menu items and a new and fun interface to a user.

This object is solved by the subject matter of the independent claims.

Preferred embodiments are defined in the dependent claims.

It is an aspect of the present invention to provide a menu effect that allows for an improved visibility of selected menu items and a new and fun interface to a user.

In accordance with one aspect of the present invention, the above can be accomplished by a method of providing a layer structure to display menu items on a mobile communication terminal, the method including the steps of providing a background layer to display a background having a plurality of tiles corresponding to menu items of the mobile communication terminal; providing an icon layer, corresponding to each tile of the background layer, to display the contents of the menu item corresponding to each tile; providing a selecting pad layer, corresponding to each tile of the background layer, to display a tile shifted by input command using an indicator; and providing a menu effect layer to output predetermined visual effects to the tile indicated by the indicator so that the user of the mobile communication terminal can easily see the current state of the tile indicated by the indicator of the selecting pad layer.

In accordance with another aspect of the present invention, there is a method of providing a menu effect having various visual effects on a tile-structured menu screen having a plurality of menu items of a mobile communication terminal, the method including the steps of when an indicator to indicate each of the menu items is moved from one of the menu items to another menu item through an input operation, outputting a first predetermined effect onto a tile corresponding to the menu item indicated by the indicator; determining whether on not a selection key is inputted to the menu item indicated by the indicator; when it is determined that no input operation is performed for a first determined period of time, outputting a second predetermined effect onto the tile corresponding to the menu item indicated by the indicator; when it is determined that an input operation is performed, outputting a third predetermined effect onto the tile corresponding to the menu item indicated by the indicator, and after the third predetermined effect is outputted, outputting a fourth predetermined effect onto the entire screen of the display unit of the mobile communication terminal, and then switching the screen.

In accordance with another aspect of the present invention, there is a method of providing a layer structure to display menu items on a mobile communication terminal, the method including the steps of providing a background layer to display a background having a plurality of tiles corresponding to the respective menu items of the mobile communication terminal, providing an icon layer, corresponding to each tile of the background layer, to display the contents of the menu item corresponding to each tile, and providing a menu effect layer, corresponding to each tile of the background layer, to output predetermined visual effects to the tile indicated by the indicator in order to display the current state of the tile shifted by means of a user's input.

The above object and other aspects, features and other advantages of the present invention will be more clearly understood from the following detailed description taken in conjunction with the accompanying drawings, in which:
FIGS. 1a and 1b are views respectively illustrating menu screens applicable to a general mobile communication terminal;
FIG. 2 is a view showing the layer structure of a conventional tile-structured menu screen;
FIG. 3 is a block diagram showing a mobile communication terminal to which the present invention is applied;
FIG. 4 is a view showing the layer structure of a menu screen on a mobile communication terminal according to a preferred embodiment of the present invention;
FIG. 5 is a view showing a menu effect on a mobile communication terminal according to a preferred embodiment of the present invention;
FIG. 6 is a view showing a menu effect on a mobile communication terminal according to another preferred embodiment of the present invention;
FIG. 7 is a flow chart illustrating a method of providing a menu effect on a mobile communication terminal using a menu effect layer according to a preferred embodiment of the present invention.

Now, a preferred embodiment of the present invention will be described in detail with reference to the accompanying drawings. In the drawings, the same or similar elements are denoted by the same reference numerals even though they are depicted in different drawings. In the following, a detailed description of known functions and configurations incorporated herein will be omitted when it may obscure the subject matter of the present invention.

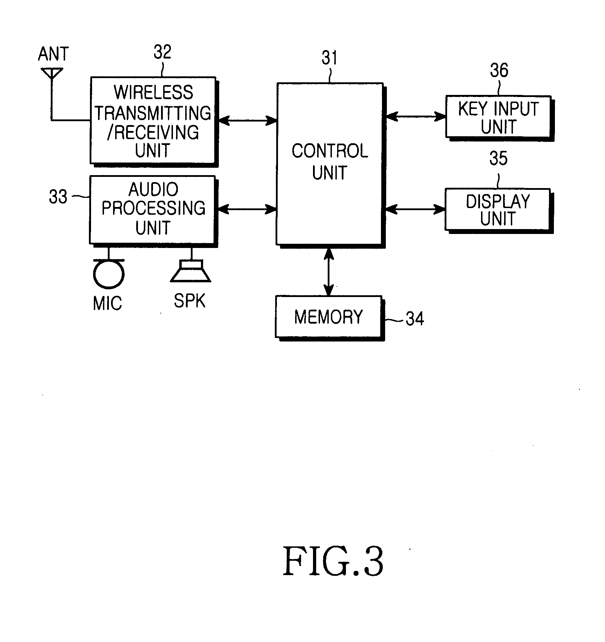

FIG. 3 is a block diagram showing a mobile communication terminal to which the present invention is applied.

As shown in FIG. 3, the mobile communication terminal to which the present invention is applied includes a control unit 31, a wireless transmitting/receiving unit 32, an audio processing unit 33, a memory 34, a key input unit 36, and a display unit 35.

The control unit 31 performs an overall control operation of the mobile communication terminal. Particularly, the control unit 31 performs the control operation such that an effect generated through the selection of the menu item can be output to the display unit 35.

The wireless transmitting/receiving unit 32 is connected to the control unit 31 for converting audio data and control data into wireless signals and transmitting the converted signals, and for receiving wireless signals, converting the received signals into audio data and control data and outputting the converted audio data and control data.

The audio processing unit 33 is connected to the control unit 31 for converting the audio data received from the control unit 31 into audible sounds and outputting the audible sounds through a speaker SPK and for converting audio signals received from a microphone MIC into data and transmitting the data to the control unit 31.

The key input unit 36 is connected to the control unit 31. The key input unit 36 comprises a plurality of numerical and character keys. In this embodiment, the key input unit 36 transmits control signals for shifting and selecting the menu item to the control unit 31.

The display unit 35 may be a liquid crystal display (LCD) unit. The menu items according to the present invention are displayed on the display unit 35. When the display unit 35 is constructed in the form of a touch screen, on the other hand, the display unit 35 may serve as the key input unit 36 so that the display unit 35 transmits control signals for shifting and selecting the menu item to the control unit 31.

The memory 34 comprises a read only memory (ROM) and a random access memory (RAM) to store a plurality of programs and data. In this embodiment, the memory 34 stores data related to display items of each layer of the menu items.

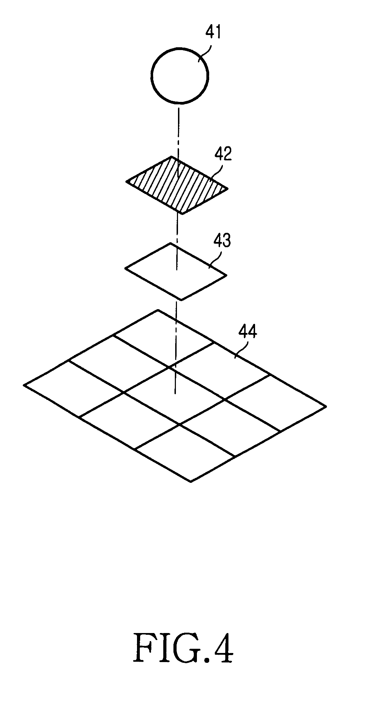

FIG. 4 is a view showing the layer structure of a menu screen on a mobile communication terminal according to a preferred embodiment of the present invention.

As shown in FIG. 4, the menu screen includes a background layer 44 to provide a tile-structured background, the background layer 44 having a plurality of tiles corresponding to menu items; a selecting pad layer 43, corresponding to each tile of the background layer 44, to provide an indicator indicating a shift between tiles corresponding to the menu items by pressing direction keys; an icon layer 41, corresponding to each tile of the background layer 44, to display the contents of the menu item corresponding to the selected tile using a symbol or a figure; and a menu effect layer 42 to provide predetermined visual effects to the selected tile or to the entire screen for informing the user of the status of the menu item indicated by the indicator and providing visual pleasure. The visual effects are superimposed upon one another such that the icon of the icon layer can be visuaiiy distinguished.

The menu screen that is constructed as described above is provided to a user as shown in FIG. 1a or FIG. 1b. The border color of the tile of the background layer 44 may be different from other colors displayed or the tile of the background layer 44 may be shaded by means of the indicator of the selecting pad layer 43 to show shift between the menu items corresponding to the tiles of the background layer 44. In this way, the desired tile is selected.

Also, a menu effect based on various situations, such as "shift," "delay after shift," "menu selection," or "screen switching" is displayed on the tile indicated by the indicator or the entire screen of the mobile communication terminal through the menu effect layer 42.

Various icons, such as an envelope icon to display text message items, a speaker icon to display sound setting items, and a monitor icon to display screen configuration items, are provided on the icon layer 41 to display the menu item corresponding to each tile.

According to the present invention, various effects, such as a dust effect, a spark effect, and a flame effect, are provided on the tile currently indicated by the indicator through the menu effect layer 42.

As stated above, the menu effect layer can be implemented as another embodiment of realizing one effect layer by layering with a selecting pad layer. That is, the embodiment of the present invention can include the feature of providing each of menu effects by using an indicator.

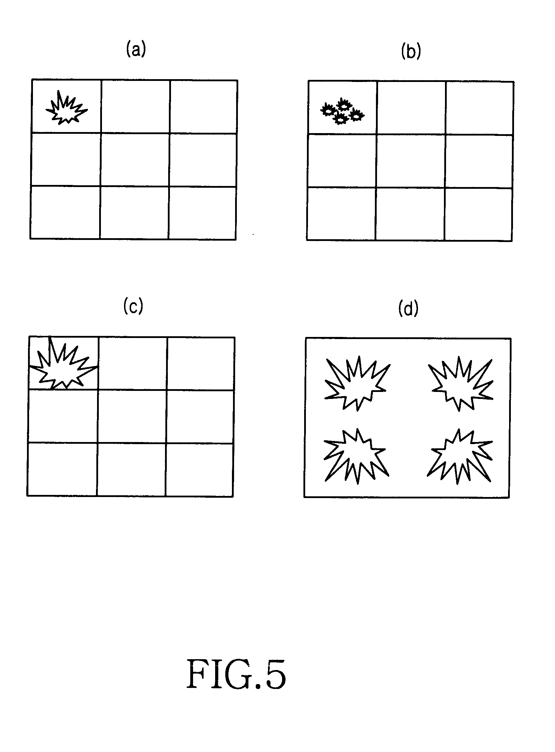

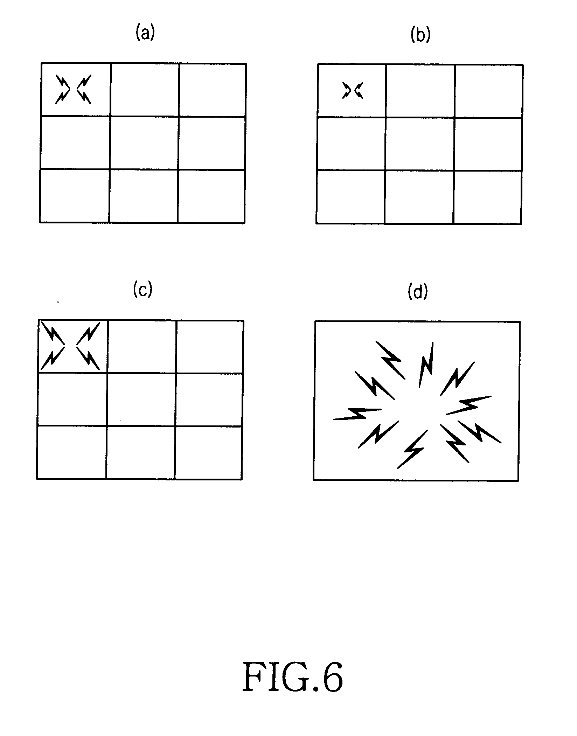

FIGS. 5 and 6 respectively illustrate the flame effect and the spark effect. It should be noted, however, that the effects illustrated in FIGS. 5 and 6 are examples, and the present invention is not limited to the illustrated menu effects. For example, other different effects may be provided depending upon the selection of users, service providers, or manufacturers of mobile communication terminals. Also, the menu effects of the present invention may be made by the users. The menu effects could also be supplied from content providers as content, and then modified according to the selection of the users.

FIG. 5a illustrates the flame effect in the state of "shift." When the indicator of the selecting pad layer 43 is moved between the menu items according to the input of a user, a glowing flame effect is provided on the menu effect layer 42 corresponding to the menu item indicated by the indicator.

FIG. 5b illustrates the flame effect in the state of "delay after shift." When no input operation is performed within a first predetermined period of time, for example, approximately 1 second, after shift to the desired menu item is completed by the user, the size of the flame is decreased such that the size of the flame is less than the size of the flame in the state of "shift." When no input operation is performed within a second predetermined period of time, for example, approximately 2 seconds, after the flame effect in the state of "delay after shift" is provided, the menu effect is finished.

FIG. 5c illustrates the flame effect in the state of "menu selection." When the menu item indicated by the indicator is selected by pressing a "confirmation" key of the key input unit 36, the size of the flame is increased such that the size of the flame is greater than the size of the flame in the state of "shift." In this way, it is confirmed that the desired menu item is selected.

FIG. 5d illustrates the flame effect in the state of "screen switching." When the current menu screen is switched to a sub menu screen of the selected menu item or another screen to perform functions according to the selected menu item, the flame effect is applied to the entire screen of the display unit 35 of the mobile communication terminal. After the flame effect is provided on the entire screen of the display unit 35, the screen is switched.

FIG. 6a illustrates the spark effect in the state of "shift." When the indicator of the selecting pad layer 43 is moved between the menu items according to the input of a user, a spark effect is provided on the menu effect layer 42 corresponding to the menu item indicated by the indicator.

FIG. 6b illustrates the spark effect in the state of "delay after shift." When no input operation is performed within a first predetermined period of time, for example, approximately 1 second, after shifting to the desired menu item is completed by the user, the size of the spark is decreased such that the size of the spark is less than the size of the spark in the state of "shift." When no input operation is performed within a second predetermined period of time, for example, approximately 2 seconds, after the spark effect in the state of "delay after shift" is provided, the menu effect is finished.

FIG. 6c illustrates the spark effect in the state of "menu selection." When the menu item indicated by the indicator is selected by pressing a "confirmation" key of the key input unit 36, the size of the spark is increased such that the size of the spark is greater than the size of the spark in the state of "shift." In this way, it is confirmed that the desired menu item is selected.

FIG. 6d illustrates the spark effect in the state of "screen switching." When the current menu screen is switched to a sub menu screen of the selected menu item or another screen to perform functions according to the selected menu item, the spark effect is applied to the entire screen of the display unit 35 of the mobile communication terminal. After the spark effect is provided on the entire screen of the display unit 35, the screen is switched.

The flame effect and the spark effect have been described above as examples. In addition, a dust effect that appears to be blowing off dust may be used. An animal effect may also be used. The animal effect may be provided as follows. In the state of "shift," an animal, for example, a tiger, strolls about. In the state of "delay after shift," the size of the tiger is decreased as if the tiger is far away. In the state of "menu selection," the tiger roars. In the state of "screen switching," the tiger rushes out, and then the screen is switched. Of course, other appropriate menu effects may also be used.

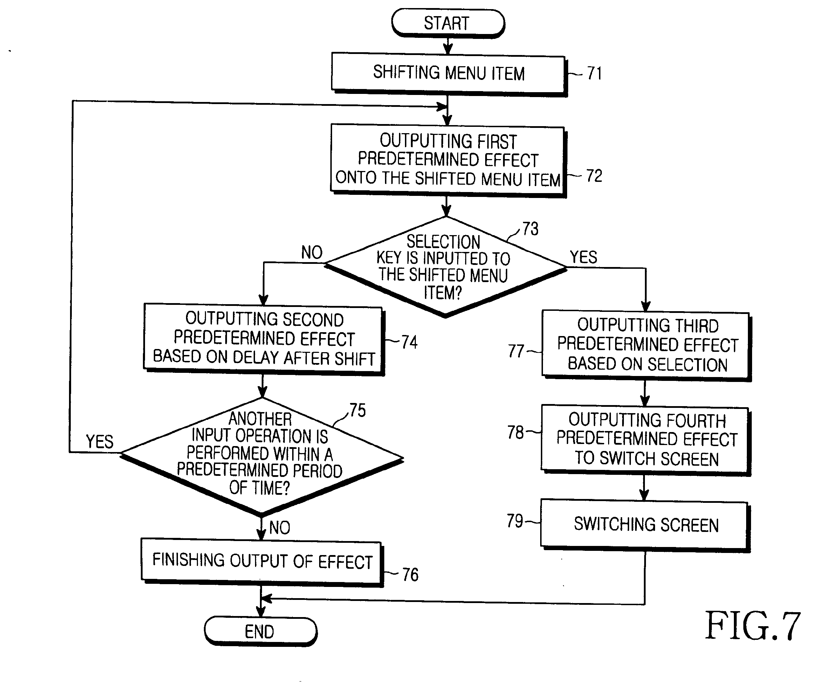

FIG. 7 is a flow chart illustrating a method of providing a menu effect on a mobile communication terminal using a menu effect layer according to a preferred embodiment of the present invention. The method of providing the menu effect will be described below with reference to FIGS. 5 and 6.

When a menu item is shifted through a user's input operation of a desired direction key on the menu screen as shown in FIG. 4 (Step 71), the indicator of the selecting pad layer 43 is moved to the shifted menu item, and a first predetermined effect is output onto a tile corresponding to the shifted menu item (Step 72). For example, the effect as shown in FIG. 5a or FIG. 6a is output.

It is then determined if a selection key is input to the shifted menu item (Step 73). If no input operation is performed within a first determined period of time, for example, approximately 1 second, a second predetermined effect is output onto the tile corresponding to the menu item indicated by the indicator (Step 74). For example, the effect as shown in FIG. 5b or FIG. 6b is output. The size of the effect at Step 74 is less than the size of the effect at Step 72.

It is then determined if an input operation is performed within a second predetermined period of time, for example, approximately 2 seconds, while the second predetermined effect is output (Step 75). If an input operation is performed, the procedure retums to Step 72 so that the first predetermined effect is output. If no input operation is performed, the operation of the menu effect layer is inactivated, and thus the output of the menu effect finishes (Step 76).

If at Step 73 an input operation is performed, a third predetermined effect is output onto the tile corresponding to the menu item indicated by the indicator (Step 77). For example, the effect as shown in FIG. 5c or FIG. 6c is output. The size of the effect at Step 77 is greater than the size of the effect at Step 72.

Subsequently, a fourth predetermined effect is output onto the entire screen of the display unit 35 of the mobile communication terminal (Step 78), and then screen switching is achieved so that the current menu screen is switched to a sub menu screen of the selected menu item or a function screen of the selected menu item (Step 79). For example, the effect as shown in FIG. 5d or FIG. 6d is output, and then the screen is switched.

As can be easily understood from the above description, the menu item is shifted and selected using the direction keys and the confirmation key of the key input unit 36. However, the menu effect according to the present invention may be provided by any other appropriate means. For example, the present invention may be applicable to a mobile communication terminal with a touch screen.

Specifically, "shift," "delay after shift," "menu selection," and "screen switching" are achieved as follows when the present invention is applied to the touch screen.

First, "shift" might be achieved by means of drag or first touch (click). "Delay after shift" might be achieved when no action is performed for a predetermined period of time after the first touch (click). "Menu selection" might be achieved when second touch (click) is performed within a predetermined period of time after the first touch (click) is performed. "Screen switching" might be achieved when the screen is switched according to the second touch (click).

"Menu selection" and "screen switching" may be consecutively performed by means of only a single action, or may be separately performed such that the menu selection is carried out by an action, and then the screen switching is carried out by another action.

For example, the menu effect according to the "menu selection" may be output for a predetermined period of time by inputting the selection key or performing the second touch (click), and then the menu effect according to the "screen switching" may be output. Alternatively, the menu effect according to the "menu selection" may be output by pressing the selection key, and the menu effect according to the "screen switching" may be output by releasing the pressed selection key. In the case of the touch screen, the menu effect according to the "menu selection" may be output by performing the second touch (click), and the menu effect according to the "screen switching" may be outputted by releasing the second touch (click).

As apparent from the above description, the present invention provides a method of providing a menu effect layer and a method of providing menu effect using the menu effect layer. Consequently, the present invention has the effect of adding entertainment functions to a user interface of a mobile communication terminal.

According to the present invention, a user's configuration and change of the menu effect are easily and conveniently achieved. Consequently, the present invention has the effect of developing the menu effect-related industry.

According to the present invention, a navigation effect is achieved through a user's input performed when the menu of the mobile communication terminal is used. Consequently, the present invention has the effect of providing correct information about the contents of the user's input.

The methods of the present invention as described above may be programmed such that the methods can be stored in recording media, such as CD-ROM, RAM, floppy discs, hard discs, magneto-optical discs.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A method of providing a layer structure to display menu items on a mobile communication terminal, the method comprising the steps of:
providing a background layer to display a background having a plurality of tiles corresponding to menu items of the mobile communication terminal;
providing an icon layer, corresponding to each tile of the background layer, to display the contents of the menu item corresponding to each tile;
providing a selecting pad layer, corresponding to each tile of the background layer, to display the tile shifted by means of an input using an indicator; and
providing a menu effect layer to output predetermined visual effects to the tile indicated by the indicator so that the user of the mobile communication terminal can easily see the current state of the tile indicated by the indicator of the selecting pad layer.

2. The method as set forth in claim 1, wherein the menu effect layer displays the current state of the tile based on a first indicator indicating that the indicator of the selecting pad layer is moved to another tile to the tile indicated by the indicator, a second indicator indicating that no input operation is performed for a predetermined period of time after the first indicator is input, a third indicator indicating that the menu item corresponding to the tile indicated by the indicator is selected, and a fourth indicator indicating that the screen is switched according to the third indicator.

3. The method as set forth in claim 2, wherein the visual effects of the menu effect layer are superimposed such that the icon of the icon layer can be visually distinguished.

4. A method of providing menu effect having various visual effects on a tile-structured menu screen having a plurality of menu items of a mobile communication terminal, the method comprising the steps of:
when an indicator is moved from a first menu item to a second menu item, outputting a first predetermined effect onto a tile corresponding to the menu item indicated by the indicator;
determining if a selection key is input to the menu item indicated by the indicator;
when it is determined that no input operation is performed for a first determined period of time, outputting a second predetermined effect onto the tile corresponding to the menu item indicated by the indicator;
when it is determined that an input operation is performed, outputting a third predetermined effect onto the tile corresponding to the menu item indicated by the indicator;
after the third predetermined effect is output, outputting a fourth predetermined effect onto the entire screen of the display unit of the mobile communication terminal; and
switching to a new menu screen.

5. The method as set forth in claim 4, wherein the first to third predetermined effects are configured such that the icon corresponding to the menu item indicated by the indicator can be visually distinguished.

6. The method as set forth in claim 4 or 5, further comprising the steps of:
determining if an input operation is performed within a second predetermined period of time after the second predetermined effect is output;
when it is determined that an input operation is performed, outputting the first predetermined effect; and
when it is determined that no input operation is performed, finishing the output of the second predetermined effect.

7. The method as set forth in one of claims 4 to 6, wherein the screen switching is switching to a sub menu screen of the selected menu item.

8. The method as set forth in one of claims 4 to 6, wherein the screen switching is switching to a function screen of the selected menu item.

9. A method of providing a layer structure to display menu items on a mobile communication terminal, the method comprising the steps of:
providing a background layer to display a background having a plurality of tiles corresponding to the respective menu items of the mobile communication terminal;
providing an icon layer, corresponding to each tile of the background layer, to display the contents of the menu item corresponding to each tile; and
providing a menu effect layer, corresponding to each tile of the background layer, to output predetermined visual effects to the tile indicated by the indicator in order to display the current state of the tile shifted by means of a user's input.

10. The method as set forth in claim 9, wherein the visual effects of the menu effect layer are superimposed such that the icon of the icon layer can be visually distinguished.
